Europäisches Patentamt

European Patent Office

Office européen des brevets

(19)

(11) Veröffentlichungsnummer: **0 203 408**
**B1**

(12) # EUROPÄISCHE PATENTSCHRIFT

(45) Veröffentlichungstag der Patentschrift: **11.04.90**

(51) Int. Cl.⁵: **B 01 D 53/02**

(21) Anmeldenummer: **86106005.1**

(22) Anmeldetag: **02.05.86**

(54) **Verfahren zum Reinigen eines Sauerstoff und Schwefelverbindungen enthaltenden Gasstroms.**

(30) Priorität: **30.05.85 DE 3519388**

(43) Veröffentlichungstag der Anmeldung:
**03.12.86 Patentblatt 86/49**

(45) Bekanntmachung des Hinweises auf die
Patenterteilung:
**11.04.90 Patentblatt 90/15**

(84) Benannte Vertragsstaaten:
**BE DE FR NL**

(56) Entgegenhaltungen:
**DE-A-2 643 756**
**DE-B-1 224 865**
**US-A-4 025 321**
**US-A-4 196 183**

**PATENTS ABSTRACTS OF JAPAN, Band 7, Nr. 281 (C-200)1426r, 15. Dezember 1983; & JP-A-58 159 830 (SEITETSU KAGAKU KOGYO K.K.) 22-09-1983**

(73) Patentinhaber: **Linde Aktiengesellschaft**
**Abraham-Lincoln-Strasse 21**
**D-6200 Wiesbaden (DE)**

(72) Erfinder: **Gerhards, Hans-Jürgen, Ing. grad.**
**Forstenrieder Allee 23**
**D-8000 München 71 (DE)**
Erfinder: **Klein-Alstädde, Wolfgang, Ing. grad.**
**Whistlerweg 9**
**D-8000 München 71 (DE)**

(74) Vertreter: **Schaefer, Gerhard, Dr.**
**Linde Aktiengesellschaft Zentrale**
**Patentabteilung**
**D-8023 Höllriegelskreuth (DE)**

Courier Press, Leamington Spa, England.

**Beschreibung**

Die Erfindung betrifft ein Verfahren zum Reinigen eines neben weiteren Verunreinigungen gasförmigen Sauerstoff und Schwefelverbindungen enthaltenden Gasstroms durch Adsorption der Verunreinigungen an einem Adsorptionsmittel und nachfolgende Desorption des mit Verunreinigungen beladenen Adsorptionsmittels.

Bei der adsorptiven Gasreinigung haben sich in vielen Fällen zeolitische Molekularsiebe als besonders günstige Adsorptionsmittel erwiesen, beispielsweise durch ihre Eigenschaft, auch noch bei sehr geringen Partialdrücken abzutrennender Komponenten eine hohe Adsorptionskapazität aufzuweisen. So werden Zeolithe beispielsweise bei der Trocknung und/oder $CO_2$-Abtrennung aus verschiedenen Gasen, der Gewinnung von Sauerstoff oder Stickstoff aus Luft, der Gewinnung von Reinwasserstoff aus Synthese-, Raffinerie- oder Koksofengasen, der Reinigung oder Zerlegung von Erdgasen oder anderen Kohlenwasserstoffgemischen und in weiteren Trennprozessen als Adsorptionsmittel eingesetzt. Viele der zu reinigenden oder zu zerlegenden Einsatzströme enthalten als Verunreinigungen auch Schwefelverbindungen, insbesondere Schwefelwasserstoff, Mercaptane oder Kohlenoxisulfid. Sofern die Gasströme neben diesen Komponenten auch noch Sauerstoff enthalten, tritt eine Schädigung des Zeoliths auf, da die Schwefelverbindungen unter Bildung von elementarem Schwefel und von Wasser mit Sauerstoff reagieren. Der elementare Schwefel setzt sich danach im Zeolith fest und führt zu einer fortschreitenden Abnahme der Adsorptionskapazität, da er bei der üblichen Desorption nicht aus dem Adsorptionsbett ausgetrieben wird.

Daneben stört in vielen Fällen auch das bei der Reaktion gebildete Wasser. In der Regel wird es vorwiegend während der Desorptionsbehandlung gebildet und führt zu einer Vorbeladung des Adsorbers mit Wasser, die beispielsweise bei einem adsorptiven Trocknungsverfahren zu einer unmittelbaren Verschlechterung des Verfahrensergebnisses führt, da das bei der Reaktion gebildete und im Adsorptionsmittel gebundene Wasser während einer nachfolgenden Adsorptionsphase teilweise mit dem Produktgas ausgetragen wird, was insbesondere bei einer Wasserbeladung des Austrittsendes des Adsorptionsbettes der Fall ist.

Um diesen unerwünschten Effekt auszuschalten und trotz der Vorbeladung mit Wasser ein trockenes Gas bei einem sehr niedrigen Taupunkt zu erhalten, wurde in der DE—C 26 43 756 bereits ein Verfahren der eingangs genannten Art vorgeschlagen, bei dem ein weiteres zeolithisches Adsorptionsbett zur zusätzlichen Trocknung bis auf den gewünschten niedrigen Taupunkt nachgeschaltet ist. Durch dieses bekannte Verfahren wird zwar die gewünschte Produktspezifikation erreicht, jedoch wird keine Schädigung des Adsorptionsmittels durch eine Beladung mit elementarem Schwefel vermieden. Aufgrund der fortschreitenden Schädigung der vorgeschalteten zeolithischen Adsorber wird deren Adsorptionskapazität laufend geringer, so daß das Adsorptionsmittel nach einer relativ kurzen Zeit verbraucht ist und ausgewechselt werden muß.

Die vorstehend am Beispiel zeolithischer Adsorber aufgezeigten Nachteile treten in ähnlicher Weise auch bei Verwendung anderer Adsorptionsmittel, beispielsweise bei Silicagel, Alugel oder Aktivkohle, auf und führen stets zu einer unerwünschten Beeinträchtigung des in erster Linie beabsichtigten Trennprozesses, also der Abtrennung anderer Verunreinigungen.

So ist aus den Patent Abstracts of Japan Vol 7, No. 281 (C-200)/1426/, Dec. 15., 1983 weiterhin ein Verfahren zur Entfernung von $H_2S$ und $CO_2$ aus Erdgas bekannt. Der Erdgasstrom wird in mehreren parallel geschalteten Adsorbergruppen mittels Druckwechseladsorption gereinigt. Jede Adsorbergruppe besteht aus zwei hintereinander geschalteten Adsorbern. Im ersten mit Aktivkohle befüllten Adsorber wird $H_2S$ adsorbiert, während im zweiten $CO_2$ mittels Kohlenstoffmolekularsieb oder zeolitischem Molekularsieb entfernt wird. Da der Erdgastrom keinen freien Sauerstoff enthält, wird kein elementarer Schwefel und damit kein Wasser gebildet. Dadurch sind die Adsorbergruppen durch einfaches Evakuieren, wobei $H_2S$ und $CO_2$ desorbieren und abgezogen werden, regenerierbar. Enthielte der zu reinigende Erdgasstrom jedoch Sauerstoff, würde das erste Adsorberbett mit elementarem Schwefel belegt, so daß der normale Adsorptions-Desorptions-Zyklus der Adsorbergruppe nach kurzer Zeit nicht mehr durchführbar wäre.

Der Erfindung liegt die Aufgabe zugrunde, ein Verfahren der eingangs genannten Art so auszugestalten, daß das Adsorptionsmittel über lange Zeiträume ohne merkliche Einhuße an Adsorptionskapazität betrieben werden kann.

Diese Aufgabe wird dadurch gelöst, daß der Gasstrom zunächst durch ein eine mit Metalloxiden imprägnierte Aktivkohle als Adsorptionsmittel enthaltendes Adsorptionsbett geleitet wird, welches dem Adsorptions-Desorptions-Zyklus der nachfolgenden Adsorptionsanlage nicht unterworfen ist, wobei der Gasstrom unter solchen Bedingungen durch das Aktivkohle-Adsorptionsbett geführt wird, daß darin der im Gasstrom enthaltene Sauerstoff vollständig mit den Schwefelverbindungen reagiert und ein an Sauerstoff freier Gasstrom austritt, und der aus dem Aktivkohle-Adsorptionsbett austretende, von Sauerstoff gereinigte, Gasstrom in einer Adsorptionsanlage, die mindestens zwei im zyklischen Wechsel zwischen Adsorption und Desorption betriebene Adsorber enthält, weiter gereinigt wird.

Ein wesentliches Ergebnis des erfindungsgemäßen Verfahrens ist darin zu sehen, daß durch die Vorschaltung eines Aktivkohle-Adsorptionsbettes die unerwünschte Bildung und Ablagerung von Schwefel vom Adsorptionsmittel der eigentlichen Adsorptionsanlage ferngehalten wird. Statt dessen findet die Reaktion der Schwefelverbindungen mit dem im Gasstrom enthaltenen Sauerstoff und die Adsorption des elementaren Schwefels in der Aktivkohle statt.

Das erfindungsgemäße Verfahren ist nicht nur dadurch vorteilhaft, daß das Adsorptionsmittel vor Schädigungen bewahrt wird, sondern in vielen Fällen unter anderem auch dadurch, daß statt des in der nachgeschalteten Adsorptionsanlage eingesetzten Adsorptionsmittels ein Adsorptionsmittel mit einer wesentlich höheren Beladekapazität für Schwefel zum Einsatz kommt. Das Aktivkohle-Adsorptionsbett, das nicht dem üblichen Adsorptions-Desorptions-Zyklus der mit mehreren Adsorbern betriebenen nachfolgenden Adsorptionsanlage unterworfen ist, kann daher mit langen Standzeiten betrieben werden. Die Standzeiten, die im Einzelfall selbstverständlich von der Dimensionierung des Aktivkohle-Adsorptionsbettes, des Gehalts an Sauerstoff und Schwefelverbindungen im Gasstrom und der Menge des zu reinigenden Gases abhängen, liegen typischerweise im Bereich von einigen Monaten bis zu über einem Jahr. Nach volständiger Beladung des Aktivkohle-Adsorptionsbettes kann dieses in einfacher Weise gegen ein neues Adsorptionsbett ausgetauscht werden.

In der Erfindung wird der Gasstrom unter solchen Bedingungen durch das Aktivkohle-Adsorptionsbett geführt, daß darin die Reaktion zwischen Sauerstoff und Schwefelverbindungen vollständig abläuft. Dies ist insbesondere dann von Vorteil, wenn die nachfolgende Adsorptionsanlage im Temperaturwechselverfahren betrieben wird, da bei den dabei üblichen hohen Regeneriertemperaturen auch bei geringen Restgehalten an Schwefelverbindungen und Sauerstoff eine rasche Umsetzung dieser Bestandteile erfolgt. Wird die nachfolgende Adsorptionsanlage dagegen im Druckwechsel betrieben, so läuft wegen der dabei üblichen tieferen Temperaturen die Schwefelbildungsreaktion wesentlich langsamer ab, so daß sich eine schädliche Schwefel-Beladung unter Umständen innerhalb der üblichen Adsorptionsmittel-Standzeiten kaum bemerkbar macht und daher toleriert werden kann. Vorzugsweise wird jedoch auch in einem solchen Fall eine vollständige Umsetzung im Aktivkohle-Adsorptionsbett angestrebt.

Das erfindungsgemäße Verfahren eignet sich insbesondere zur Behandlung von schwefelwasserstoffhaltigen Gasströmen, deren Gehalt an gasförmigem Sauerstoff zwischen 1 und 1000 ppm, vorzugsweise zwischen 1 und 100 ppm liegt. Ist dagegen die Sauerstoffkonzentration deutlich höher, kann es durch die Exothermie bei der Reaktion zu einer unzulässig hohen Temperaturerhöhung im Aktivkohle-Adsorptionsbett kommen, die schließlich zu einer Selbstentzündung der Aktivkohle führen könnte.

In erfindungsgemäßen Verfahren wird eine imprägnierte Aktivkohle als Adsorptionsmittel eingesetzt. Die Imprägnierung kann mit verschiedenen, die Reaktion der Schwefelverbindungen mit Sauerstoff begünstigenden Stoffen erfolgen, beispielsweise mit Metalloxiden, wie Eisenoxid oder Kupfer-Chrom-Oxiden. Der Einsatz derartiger Adsorptionsmittel hat zudem den Vorteil, daß auch nach vollständiger Reaktion des Sauerstoffs noch eine weitere Bindung von Schwefelkomponenten erfolgt, so daß eine zusätzliche Entschwefelung vor Eintritt des Gasstroms in die nachfolgende Adsorptionsanlage durchgeführt wird.

Bei der konstruktiven Ausführung des erfindungsgemäßen Verfahrens kann das Aktivkohle-Adsorptionsbett vorzugsweise in einem separaten Behälter angeordnet werden. Es ist jedoch auch möglich, das Aktivkohle-Adsorptionsbett innerhalb des Behälters, in dem sich auch ein nachfolgendes Adsorptionsbett befindet, anzuordnen. In einem solchen Fall könnte allerdings das Auswechseln verbrauchter Aktivkohle dadurch schwieriger werden, weil die Adsorptionsanlage oder zumindest der einzelne Adsorptionsbehälter außer Betrieb gesetzt werden müßte.

Im Fall der separat vorgeschalteten Adsorptionsbehälter kann dagegen auch ein vollständig kontinuierlicher Betrieb sichergestellt werden, wenn zwei vorgeschaltete Adsorber mit einer entsprechenden Umschalteinrichtung vorgesehen sind.

Als Schwefelverbindungen kommen bei erfindungsgemäßen Verfahren insbesondere Schwefelwasserstoff und leichte Mercaptane in Betracht. Kohlenoxisulfid oder schwerere Mercaptane, die wesentlich langsamer mit Sauerstoff reagieren und daher auch nur in geringerem Maß für die Schädigung eines Adsorptionsmittels in Frage kommen, werden dagegen nur in geringerem Maße umgesetzt oder benötigen eine höhere Adsorptionstemperatur, beispielsweise eine Temperatur zwischen 200 und 300°C im Aktivkohle-Adsorptionsbett.

In einem speziellen Ausführungsbeispiel der Erfindung wurden 8880 Nm$^3$/h eines Gases der Zusammensetzung

| | |
|---|---|
| $H_2$ | 21 Vol-% |
| $CH_4$ | 28 Vol-% |
| $C_2H_6$ | 35,2 Vol-% |
| $C_3H_8$ | 9 Vol-% |
| $C_{4+}$ | 5,5 Vol-% |
| $H_2S$ | 1,1 Vol-% |
| $H_2O$ | 0,2 Vol-% |
| $O_2$ | 10 Vppm |

bei einer Temperatur von 30°C und einem Druck von 22 bar einer Trocknung unterworfen. Der Gasstrom wurde zunächst durch ein Aktivkohle-Adsorptionsbett, das unter der Handelsbezeichnung NORIT RFZ-3 erhältlich ist, geleitet, um den im Gas enthaltenen Sauerstoff durch Umsetzung mit Schwefelwasserstoff zu entferenen. Das aus dem Aktivkohle-Adsorptionsbett austretende Gas hat einen Sauerstoffgehalt von weniger als 1 Vppm, sonst die gleiche Zusammensetzung wie das eintretente Gas und wird in einer nachfolgenden üblichen Adsorptionsanlage in zeolithischen Adsorptionsbetten getrocknet. Das Aktivkohle-Adsorptionsbett hat bis zur vollständigen Beladung mit Schwefel eine Standzeit von ca. 12 Monaten und wird dann gegen ein neues Adsorptionsbett ausgewechselt. In den zeolithischen Adsorptionsbetten konnte keine Beeinträchtigung der Adsorptionskapazität durch Schwefelablagerungen festgestellt werden.

**Patentansprüche**

1. Verfahren zum Reinigen eines neben weiteren Verunreinigungen gasförmigen Sauerstoff und Schwefelverbindungen enthaltenden Gasstroms durch Adsorption der Verunreinigungen an einem Adsorptionsmittel und nachfolgende Desorption des mit Verunreinigungen beladenden Adsorptionsmittels, dadurch gekennzeichnet, daß der Gasstrom zunächst durch ein, eine mit Metalloxiden imprägnierte, Aktivkohle als Adsorptionsmittel enthaltendes Adsorptionsbett geleitet wird, welches dem Adsorptions-Desorptions-Zyklus der nachfolgenden Adsorptionsanlage nicht unterworfen ist, wobei der Gasstrom unter solchen Bedingungen durch das Aktivkohle-Adsorptionsbett geführt wird, daß darin der im Gasstrom enthaltene Sauerstoff vollständig mit den Schwefelverbindungen reagiert und ein an Sauerstoff freier Gasstrom austritt und der aus dem Aktivkohle-Adsorptionsbett austretende, von Sauerstoff gereinigte, Gasstrom in einer Adsorptionsanlage, die mindestens zwei im zyklischen Wechsel zwischen Adsorption und Desorption betriebene Adsorber enthält, weiter gereinigt wird.

2. Verfahren nach Ansprüche 1, dadurch gekennzeichnet, daß das Aktivkohle-Adsorptionsbett in einem separaten Behälter angeordnet ist.

3. Verfahren nach Ansprüche 1, dadurch gekennzeichnet, daß das Aktivkohle-Adsorptionsbett innerhalb des Behälters, in dem sich auch ein nachfolgendes Adsorptionsbett befindet, angeordnet ist.

**Revendications**

1. Procédé de purification d'un courant de gaz contenant, en plus d'autres impuretés, de l'oxygène et des composés sulfurés sous forme gazeuse, par adsorption des impuretés sur un agent adsorbant et désorption subséquente de l'agent adsorbant chargé d'impuretés, caractérisé en ce que le courant de gaz est d'aborb passé sur un lit adsorbant contenant comme agent adsorbant du charbon actif imprégné d'oxydes métalliques et qui n'est pas soumis au cycle d'adsorption-désorption alternées de l'unité d'adsorption située au aval, en ce que le courant de gaz passe sur le lit adsorbant de charbon actif dans des conditions telles que l'oxygène contenu dans ce courant gazeux réagit complètement avec les composés sulfurés, en ce que le courant de gaz quittant ce lit adsorbant de charbon actif ne contient plus d'oxygène et en ce que ce courant gazeux, épuré de l'oxygène, est ultérieurement purifié dans une unité d'adsorption contenant au moins deux adsorbants qui, de façon cyclique, fonctionnent en adsorption puis en désorption.

2. Procédé selon la revendication 1, caractérisé en ce que le lit adsorbant de charbon actif est situé dans un récipient distinct.

3. Procédé selon la revendication 1, caractérisé en ce que le lit adsorbant de charbon actif est disposé à l'intérieur du récipient, dans lequel se trouve également en aval un lit adsorbant.

**Claims**

1. A process for purifying a gas stream which contains gaseous oxygen and sulphur compounds in addition to other impurities, by adsorption of the impurities by an adsorption agent and subsequent desorption of the adsorption agent charged with impurities, characterised in that the gas stream is firstly conducted through an adsorption bed which is impregnated with metal oxides, which contains active carbon as adsorption agent and which is not subjected to the adsorption-desorption cycle of the following adsorption system, where the gas stream is conducted through the active carbon adsorption bed under such conditions that in the adsorption bed the oxygen contained in the gas stream reacts fully with the sulphur compounds and a gas stream which is free of oxygen is discharged and the gas stream which is discharged from the active carbon adsorption bed and which has been purified by oxygen is further purified in an adsorption system which comprises at least two adsorbers which are operated in cyclic alternation between adsorption and desorption.

2. A process as claimed in Claim 1, characterised in that the active carbon adsorption bed is arranged in a separate container.

3. A process as claimed in Claim 1, characterised in that the active carbon adsorption bed is arranged in the container which also contains a following adsorption bed.